# EUROPEAN PATENT APPLICATION

(11) **EP 2 385 566 A1**
(43) Date of publication of application: **09.11.2011**
(21) Application number: 11250278.6
(22) Date of filing: 10.03.2011
(51) Int. Cl.: H01M 2/04, H01M 2/20, H01M 10/04

(54) **Rechargeable battery assembly**

(30) Priority: 03.05.2010 US 330795 P; 30.11.2010 US 957321
(71) Applicant: Samsung SDI Co., Ltd., Yongin-si, Gyeonggi-do (KR)
(72) Inventor: Park, Sang-Hun, Yongin-si, Geonggi-do (KR)
(74) Representative: Mounteney, Simon James

(57) **Abstract**

A rechargeable battery assembly comprising: a first unit cell;
a second unit cell provided with a cap plate; and a connection tab mounted on a case of the first unit cell; wherein the connection tab comprises a connection tab coupling formation protruding from the first unit cell and the cap plate comprises a cap plate coupling formation protruding from the second unit cell; and the connection tab coupling formation is coupled with the cap plate coupling formation to form a mechanical and electrical connection between the two unit cells; characterised in that a first one of the said coupling formations comprises an axially projecting member provided with a circumferential extension and the circumferential extension is constrained by a second one of the said coupling formations (31 a) in such a manner as to resist axial separation of the two unit cells.

## Description

### BACKGROUND OF THE INVENTION

### (a) Field of the Invention

The present invention relates to a rechargeable battery assembly comprising a plurality of rechargeable battery cells and a connection tab.

### (b) Description of the Related Art

Technological development and increased demand for mobile equipment have led to a rapid increase in the demand for rechargeable batteries as an energy source. The rechargeable batteries can be used in the form of a single cell or in the form of a pack having a plurality of cells electrically connected according to the type of equipment used.

In general, cylindrical rechargeable batteries have higher capacity than a prismatic rechargeable battery or pouch-type rechargeable battery, and are connected in series or parallel to form a rechargeable battery assembly having a linear or plate structure. Such a rechargeable battery assembly comprises a core pack having a plurality of cylindrical rechargeable battery cells connected in series or in parallel and a connection tab for electrically connecting a positive terminal and a negative terminal to a protection circuit in the core pack.

For instance, a core pack having a serial structure is formed by welding different electrodes of rechargeable battery cells to one surface of the connection tab and then bending the connection tab. Also, a core pack having a parallel structure is formed by welding the same electrodes of rechargeable battery cells to one surface of the connection tab and then bending the connection tab. That is, linearly disposed rechargeable battery cells are electrically connected through the bent portion of the connection tab. Accordingly, the binding force, straightforwardness, and impact resistance of the rechargeable battery cells are weak.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention sets out to provide a rechargeable battery assembly, which, upon connecting a plurality of rechargeable battery cells, forms a strong binding force between the cells and reduces the volume of the cells, and a connection tab used for the same.
assemblyassemblyAccordingly, the invention provides a rechargeable battery assembly as set out in Claim 1.
assemblystop formationPreferred features of the invention are set out in Claims 2 to 14.

An embodiment of the invention therefore makes it possible to connect the first and second unit cells with a strong binding force and reduce the volume of the rechargeable battery assembly by connecting the connection tab to the case of the first unit cell and coupling the connection tab to the cap plate of the second unit cell.

### BRIEF DESCRIPTION OF THE DRAWINGS

FIG. 1 an exploded perspective view of a rechargeable battery assembly according to a first embodiment of the present invention.
FIG. 2 is a cross-sectional view showing the structure of the unit cells of the rechargeable battery assembly of FIG. 1.
FIG. 3 is an exploded perspective view of a connection tab and a cap plate separated from each other that are applied to the rechargeable battery assembly of FIG. 1.
FIG. 4 is a side view of protrusions of the cap plate being coupled to the connection tab of FIG. 3.
FIG. 5 is a cross-sectional view taken along line V-V.
FIG. 6 is a top plan view of the protrusions of the cap plate being coupled to the connection tab of FIG. 3.
FIG. 7 is a top plan view of a coupling state of a connection tab and a cap plate in a rechargeable battery assembly according to a second embodiment of the present invention.
FIG. 8 is a top plan view of a coupling state of a connection tab and a cap plate in a rechargeable battery assembly 300 according to a third embodiment of the present invention.
FIG. 9 is a perspective view of an elastic member applied to the rechargeable battery assembly shown in FIG. 8.
FIG. 10 is a top plan view of a coupling state of a connection tab and a cap plate in a rechargeable battery assembly according to a fourth embodiment of the present invention.
FIG. 11 is a perspective view of a connection tab of a rechargeable battery assembly according to a fifth embodiment of the present invention.
FIG. 12 is a perspective view of a connection tab of a rechargeable batter according to a sixth embodiment of the present invention.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

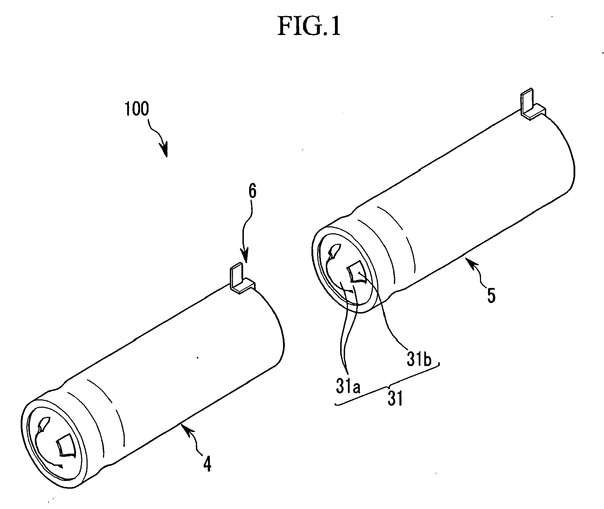

FIG. 1 an exploded perspective view of a rechargeable battery assembly according to a first embodiment of the present invention. The rechargeable battery assembly 100 comprises at least two of a first unit cell 4 and a second unit cell 5 connected in series to form a core pack and a connection tab 6 for connecting electrode terminals of the first and second unit cells 4 and 5 to a protection circuit (not shown).

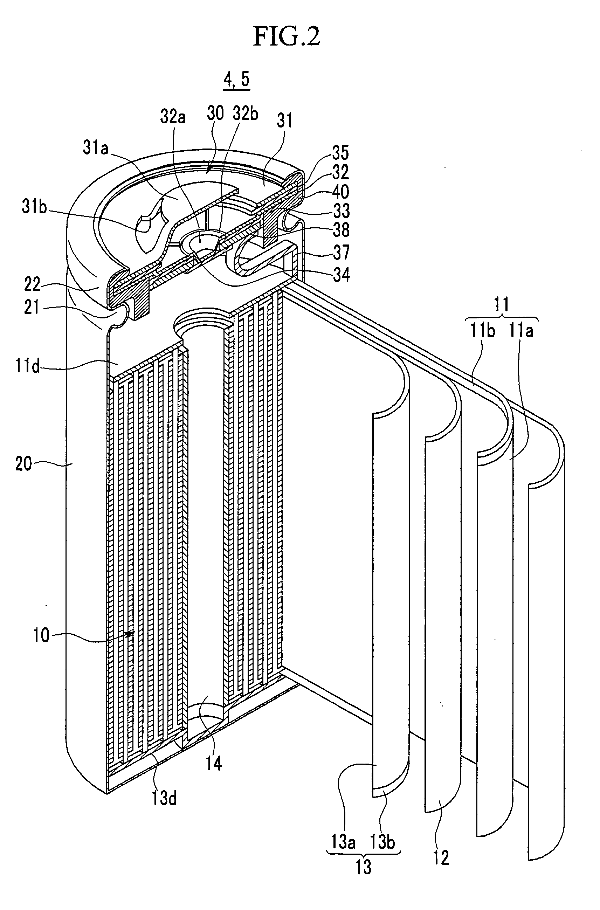

For convenience of explanation, the rechargeable battery assembly 100 will be described as an example. By applying the connection tab 6 of the first embodiment, as compared to parallel connection of the first and second unit cells 4 and 5, serial connection of the first and second unit cells 4 and 5 has the advantage that a cylindrical rechargeable battery (see FIG. 2) having a flat negative terminal (e.g., case 20 having a flat surface) and a protruding positive terminal (e.g., cap plate 31 having protrusions) can be used as it is. Parallel connections are within the scope of the invention, however.

The flat surface of the case 20 is used as the negative terminal of the serial connection of the first and second unit cells 4 and 5, the connection tab 6 is in a shape of a protruding structure and is connected to the flat surface of the case 20, and the positive terminal is formed of the cap plate 31 protruding to the opposite side of the connection tab 6 and connected to the flat surface of the case 20.

That is, the first and second unit cells 4 and 5 are formed in the same structure. The first and second unit cells 4 and 5 allow the positive terminal and the negative terminal to be coupled to each other by applying a protruding structure thereto. Therefore, the first and second unit cells 4 and 5 are connected in series by coupling the cap plate 31 serving as the positive terminal of the second unit cell 5 to the connection tab 6 connected to the flat surface of the case 20 serving as the negative terminal of the first unit cell 4.

FIG. 2 is a cross-sectional view showing the structure of the unit cells of the rechargeable battery assembly of FIG. 1. Referring to FIG. 2, first and second unit cells 4 and 5 comprise an electrode array 10 for generating current, a case 20 for containing the electrode array 10, and a cap assembly 30 electrically connected to the electrode array 10 through the case 20.

The electrode array 10 comprises a first electrode (hereinafter, referred to as 'positive electrode') 11, a separator 12, and a second electrode 13 (hereinafter, referred to as 'negative electrode') that are sequentially layered. The electrode array 10 is formed by spirally winding the positive electrode 11, the negative electrode 13, and the separator 12, which is an insulator interposed therebetween. The electrode array 10 has a cylindrical shape. A sector pin 14 is disposed at the center of the cylindrical electrode array 10. The sector pin 14 serves to maintain the cylindrical shape of the electrode array 10.

The positive electrode 11 and the negative electrode 13 comprise current collectors 11c and 13c formed of thin metal foils, coated sections 11a and 13a coated with an active material on both sides of the current collectors 11c and 13c, and uncoated sections 11b and 13b coated with no active material on the opposite ends of the current collectors 11 c and 13c. In a jelly-roll state, a positive current collector plate 11 d is connected to the uncoated section 11 b of the positive electrode 11, and a negative current collector plate 13d is connected to the uncoated section 13b of the negative electrode 13.

The case 20 has a cylindrical shape with one side open to allow for insertion of the electrode array 10. The case 20 is connected to the negative current collector plate 13d to operate as a negative terminal of the first and second unit cells 4 and 5. The case 20 is formed of a conductive metal, for example, aluminum, an aluminum alloy, or nickel-plated steel.

The cap assembly 30 is connected to the open side of the case 20 with a gasket 40 interposed between the cap assembly and the case, thereby sealing the case 20 containing the electrode array 10 and an electrolyte therein. Also, the cap assembly 30 comprises a current interruption device and is electrically connected to the electrode array 10 through the current interruption device. The cap assembly 30 comprises a cap plate 31, a vent plate 32, an insulation plate 33, a sub-plate 34, a positive temperature coefficient element 35, and a middle plate 38.

Finally, the cap plate 31 is connected to the positive current collector plate 11d, and operates as a positive terminal of the first and second unit cells 4. The cap plate 31 comprises first protrusions 31 a protruding outward from the case 20 and an exhaust port 31 b opened laterally from the first protrusions 31 a. The first protrusions 31a define a coupling formation.

Substantially, the current interruption device is formed of the vent plate 32 and the sub-plate 34, and the connection of the current interruption device is formed by a welded portion of the vent plate 32 and the sub-plate 34. The vent plate 32 formed at one end of the current interruption device is disposed on the interior of the cap plate 31, thereby being electrically connectable to the sub-plate 34 that forms the other end of the current interruption device. Also, the vent plate 32 includes a vent 32a that can be fractured at a preset pressure to allow the discharge of internal gas of the first and second unit cells 4and 5 and interrupt electric connection to the sub-plate 34.

When the current interruption device operates, that is, when the connection of the vent plate 32 and the sub-plate 34 are separated, the electrode array 10 is electrically disconnected from the cap plate 31. In one example, the vent 32a protrudes from the vent plate 32 toward an interior of the case 20. The vent plate 32 comprises a notch 32b around the vent 32a for guiding fracture of the vent 32a. The notch 32b prevents explosion of the rechargeable battery 100 by fracturing and discharging gas if pressure is increased by gas generated in the case 20.

The positive temperature coefficient element 35 is disposed between the cap plate 31 and the vent plate 32 and controls current flow between the cap plate 31 and the vent plate 32. The positive temperature coefficient element 35 has electrical resistance that infinitely increases when it exceeds a preset temperature, therefore, allowing it to interrupt charge or discharge current flow.

The sub-plate 34 faces the vent plate 32 with the insulating plate 33 interposed therebetween, and is electrically connected to the vent 32a. The middle plate 38 is disposed between the insulating plate 33 and the sub-plate 34. The vent 32a protruding through penetration holes is connected to the sub-plate 34. Therefore, one side of the middle plate 38 is electrically connected to the vent plate 32 through the sub-plate 34 and the vent 32a, and another side thereof is connected to the positive current collector plate 11d through a connecting member 37. As a result, the positive current collector plate 11 d is electrically connected to the cap plate 31 through the connecting member 37, the middle plate 38, the sub-plate 34, the vent 32a, the vent plate 32, and the positive temperature coefficient element 35.

The thus-formed cap assembly 30 is inserted into the case 20 and then fixed to the case 20 by clamping, thereby completing the first and second unit cells 4 and 5. At this point, a beading unit 21 and a clamping unit 22 are formed.

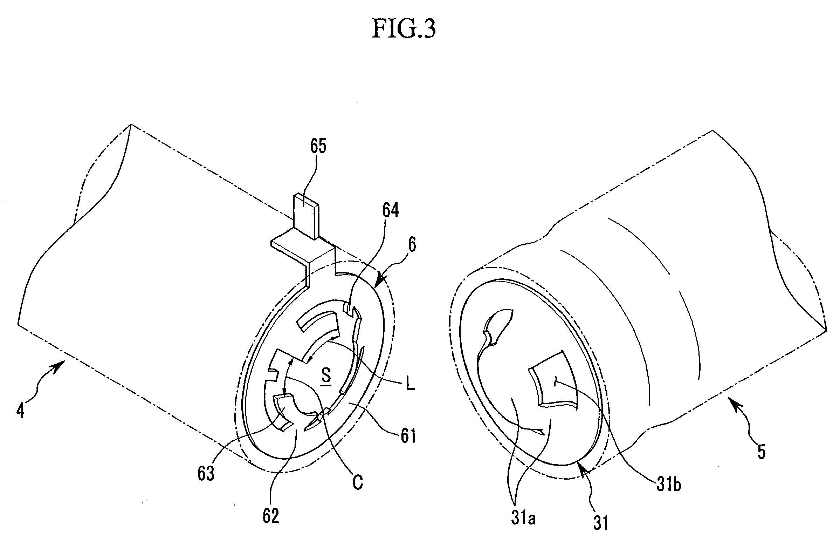

FIG. 3 is an exploded perspective view of the connection tab and a cap plate separated from each other. Referring to FIGS. 1 and 3, the connection tab 6 is connected to the flat surface of the case 20 of the first unit cell 4 to protrude to the opposite side of the flat surface of the case 20, and is coupled to the cap plate 31 protruding from the second unit cell 5 toward the first unit cell 4. That is, the connection tab 6 and the cap plate 31 are formed such that they protrude toward to each other so as to be coupled to each other.

The first protrusions 31 a of the cap plate 31 of the second unit cell 5 take the form of tangs linked by an end plate. Together, this structure protrudes outward from the center of the cap plate 31, and the exhaust port 31 b is disposed at equal intervals with the tangs in between. In this embodiment, three exhaust ports 31 b are formed at equal intervals and form a stable connection structure with the connection tab 6. However, the number of the exhaust ports 31b may be 1 or 2, and accordingly the protrusion structure of the connection tab 6 may be modified depending on the number of the exhaust ports 31 b.

The connection tab 6 of the first embodiment is welded to the flat surface of the case 20 of the first unit cell 4. The connection tab 6 comprises a flange 61 formed as a doughnut-shaped ring corresponding to the circular outer periphery of the flat surface of the case 20 and electrically connected to the case 20, second protrusions 62 in the form of lugs disposed at equal intervals on the flange 61 and protruding to the opposite side of the case 20, guides 63 in the form of circumferential extensions formed with a given length L along the circumferential direction of the flange 61, stop formations 64 protruding from the flange 61 at one side of the second protrusions 62, and a pull tab 65 connected to the flange 61 and connected to a protection circuit (not shown). The second protrusions 62 and guides 63 together define a coupling formation.

The flange 61 forms an electrical connection structure on the case 20 by being welded to the case 20. The flange 61 forms the base of the connection tab 6, and connects the case 20 and the cap plate 31 to the protection circuit through the pull tab 65 connected to a diameter direction outer end to pull current of the first and second unit cells 4 and 5 to the protection circuit.

The second protrusions 62 are formed to protrude as they are inclined toward the center of the flange 61 from diameter direction inner ends of the flange 61. Therefore, with respect to the length of the circumference set along the circumferential direction, the plurality of protrusions 62 become shorter in length than the portion connected to the flange 61 as they become distant from the flange 61.

The guides 63 are formed in a curve along one side of the circumferential direction at an end of the second protrusions 62. That, the guides 63 are not connected to each other because they extend in one direction (e.g., clockwise) from the second protrusions 62. Thus, a circumferential gap C is provided between the second protrusion 62 and the guide 63 neighboring to each other, and the second protrusion 62 and the guide 63 are not formed in this gap C. Also, the plurality of guides 63 forms a space S at the center of their extensions. The first protrusions 31 a of the cap plate 31 are inserted in the length direction (i.e., axial direction) of the first and second unit cells 4 and 5 through the space S. At this point, a side portion of the protrusion 31a is inserted into the gap C. Therefore, the circumferential length of the protrusions 31 a is shorter than the length of the gap C.

The stop formation 64 is formed at a portion of the flange 61 corresponding to the gap C. The stop formation 64 enables axial and rotatable insertion of the first protrusions 31a of the cap plate 31 with respect to the second protrusions 62 and the guides 63, and stops the separation of the first protrusions 31a from the second protrusions 62 and the guides 63 by preventing reverse rotation of the first protrusions 31a after the axial and rotatable insertion.

To this end, the stop formation 64 is formed of an elastic material at an inner end of the flange 61. The connection tab 6, as well as the stop formation 64, can be entirely formed of an elastic material. Although the stop formation 64 may be formed only in one of the gaps C provided along the circumferential direction of the flange 61, the stop formation 64 may be formed at all of the three gaps as shown in the drawing, thus more effectively preventing the first protrusions 31 a of the cap plate 31 from the second protrusions 62 and the guides 63.

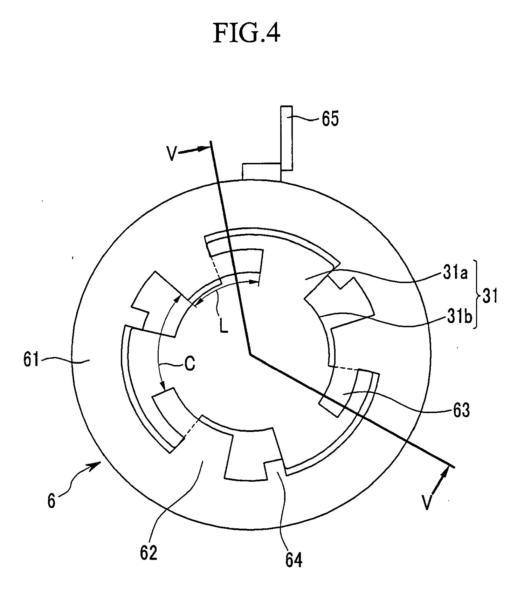

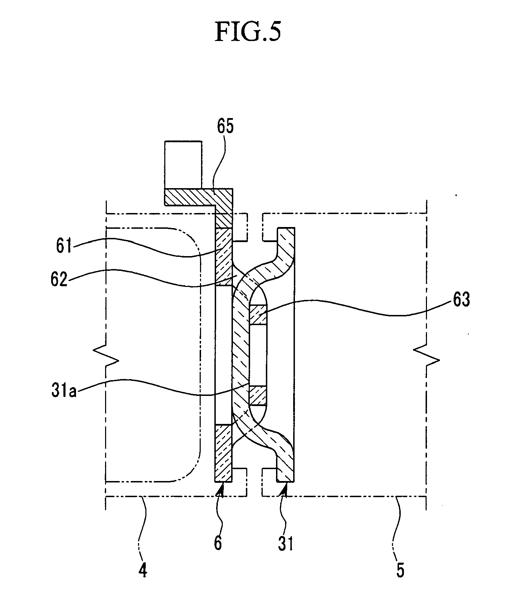

FIG. 4 is a side view of protrusions of the cap plate being coupled to the connection tab of FIG. 3, and FIG. 5 is a cross-sectional view taken along line V-V. Referring to FIGS. 4 and 5, the coupling of the first and second unit cells 4 and 5 will be described.

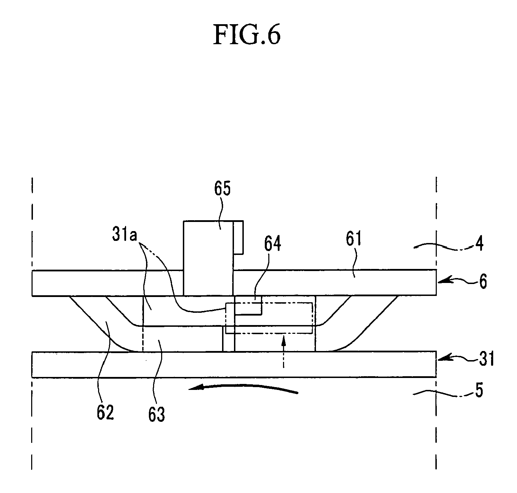

Upon coupling the first and second unit cells 4 and 5, the first protrusions 31 a of the cap plate 31 are inserted in the axial direction of the first and second unit cells 4 and 5 through the space S and gaps C formed on the connection tab 6. Upon completion of the axial insertion, the front ends of the first protrusions 31a of the cap plate 31 pressurize the stop formations 64 (as indicated by the two-dot chain line of FIG. 6).

After completion of the axial insertion, as the first unit cell 4 is fixed and the second unit cell 5 is rotated (counterclockwise), the first protrusions 31 a of the cap plate 31 are rotated, whereby the guides 63 are relatively inserted and coupled to the exhaust ports 31 b. Also, as the second unit cell 5 is fixed and the first unit cell 4 is rotated (clockwise), the guides 63 are rotated and inserted and coupled to the exhaust ports 31 b. At this point, end surface portions of the first protrusions 31a are tightly contacted to the inner end of the flange 61, and the guides 63 on the inside of the exhaust ports 31 b are tightly contacted to inner surface portions of the first protrusions 31 a and thus electrically connected thereto.

FIG. 6 is a top plan view of the protrusions of the cap plate being coupled to the connection tab of FIG. 3. Referring to FIG. 6, when inserted in the axial direction of the first and second unit cells 4 and 5 (as indicated by two-dot chain line), the first protrusion 31 a of the cap plate 31 pressurizes and deforms the stop formation 64, and when the first protrusion 31 a is released from the stop formation 64 by rotatable insertion, the stop formation 64 is restored by its elasticity and maintained in a protruding position relative to one side of the first protrusion 31 a of the cap plate 31. That is, the stop formation 64 is maintained in a rotatably inserted position by preventing reverse rotation of the first protrusion 31 a of the cap plate 31 relative to the guide 63. At this point, a side surface of the stop formation 64 is tightly contacted to a side surface of the protrusion 31a. Therefore, the axially connected state between the guide 63 and the exhaust port 31b is firmly maintained.

Now, further embodiments of the present invention will be described. A description of the same components as those of the first embodiment will be omitted and different components from those of the first embodiment will be descried.

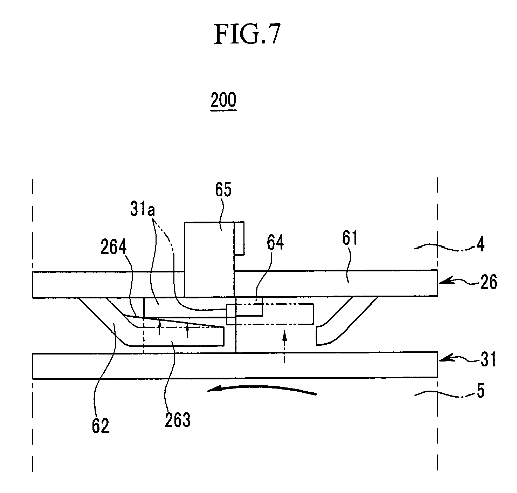

FIG. 7 is a top plan view of a coupling state of a connection tab and a cap plate in a rechargeable battery assembly 200 according to a second embodiment of the present invention. The connection tab 6 of the first embodiment forms the inner surface of the guide 63 as a flat surface, whereas, referring to FIG. 7, a connection tab 26 in the rechargeable battery assembly 200 of the second embodiment forms the inner surface of a guide 263 as an inclined camming surface 264.

When the outer surface of the guide 263 is formed in parallel with the flange 61, the inner surface of the guide 263, that is, the inclined surface 264, becomes closer to the flange 61 as it gets nearer to the second protrusion 62 and becomes gradually more distant from the flange 61 as it gets farther from the second protrusion 62.

After completion of the axial insertion of the second unit cell 5 with respect to the first unit cell 4, as the first unit cell 4 is fixed and the second unit cell 5 is rotated (counterclockwise), the guides 263 are relatively inserted and coupled to the exhaust ports 31 b. Also, as the second unit cell 5 is fixed and the first unit cell 4 is rotated (clockwise), the guides 263 are rotated and inserted and coupled to the exhaust ports 31 b.

At this point, the inclined camming surfaces 264 of the guides 263 push the first protrusions 31a of the cap plate 31 to the flange 61 as the rotation proceeds further. Therefore, the first protrusions 31 a can be tightly contacted to the flange 61, and if the first protrusions 31 a are smaller than the circumference formed on the inner edge of the flange 61, the first protrusions 31a are contacted with the case 20 over a wide area by a larger inclination of the inclined surface 264, thereby forming an electrical connection structure having a low resistance.

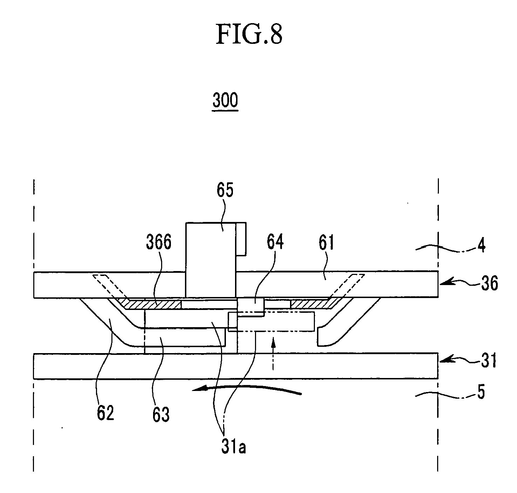

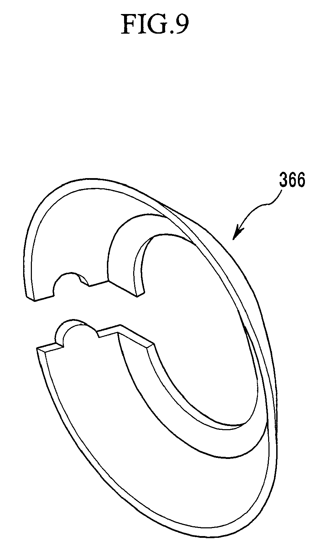

FIG. 8 is a top plan view of a coupling state of a connection tab and a cap plate in a rechargeable battery assembly 300 according to a third embodiment of the present invention, and FIG. 9 is a perspective view of an elastic member applied to the rechargeable battery assembly shown in FIG. 8. The connection tab 6 of the first embodiment forms a structure of directly connecting the first protrusion 31 a of the cap plate 31 to the flange 61 or the case 20, whereas, referring to FIGS. 8 and 9, a connection tab 36 of the rechargeable battery assembly 300 of the third embodiment further comprises an elastic member 366 interposed between the first protrusion 31 a and the case 20.

For instance, the elastic member 366 has a cutout structure formed by cutting a frustum of a cone open, and has elasticity in an axial direction while moving in a diameter direction. Upon completion of the axial insertion of the second unit cell 5 with respect to the first unit cell 4, the front ends of the first protrusions 31 a of the cap plate 31 pressurize the stop formations 64 and the elastic member 366.

After completion of the axial insertion, as the first unit cell 4 is fixed and the second unit cell 5 is rotated (counterclockwise), the guides 63 are relatively inserted and coupled to the exhaust ports 31 b. Also, as the second unit cell 5 is fixed and the first unit cell 4 is rotated (clockwise), the guides 63 are rotated and inserted and coupled to the exhaust ports 31 b.

At this point, the elastic member 366 pushes the first protrusions 31 a of the cap plate 31 while providing elasticity in the axial direction, thereby tightly contacting and electrically connecting end surface portions of the first protrusions 31 a of the cap plate 31 to the inner surfaces of the guides 63. The first protrusions 31a and the guides 63 are contacted with each other over a wide area, thereby forming an electrical connection structure having a low resistance. Moreover, if the elastic member 366 is formed of a conductive material, the elastic member 366 can form a low resistance structure by further electrically connecting the case 20 and the first protrusions 31 a.

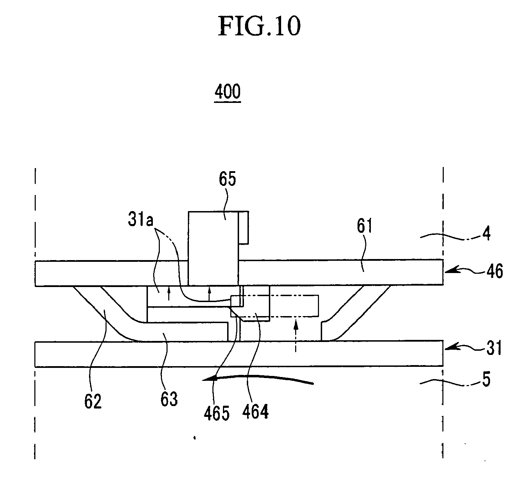

FIG. 10 is a top plan view of a coupling state of a connection tab and a cap plate in a rechargeable battery assembly 400 according to a fourth embodiment of the present invention. The connection tab 6 of the first embodiment allows the stop formations 64 to have a straight line structure with respect to an axial direction, whereas, referring to FIG. 10, stop formations 464 of a connection tab 46 of the rechargeable battery assembly 400 each further comprise a protuberance 465 protruding in a circumferential direction, so as to give them a hooked shape.

The outside of the protuberance 465 is formed as an inclined surface and the inside thereof is formed as a vertical plane so as not to inhibit axial insertion and so as to prevent reverse pulling. Therefore, in the connection tab 46 of the fourth embodiment, the stop formations 464 prevent reverse rotation after the first protrusions 31a of the cap plate 31 are rotatably inserted, and in addition, the protuberance 465 prevents reverse pulling after the first protrusions 31 a are axially inserted.

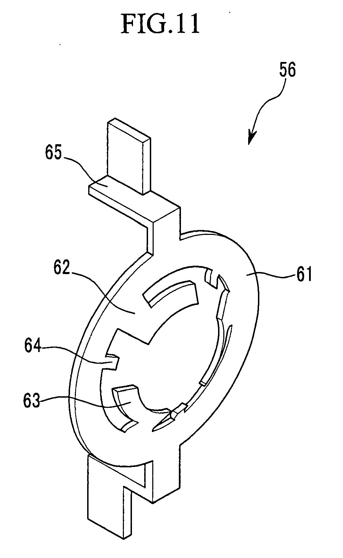

FIG. 11 is a perspective view of a connection tab 56 of a rechargeable battery assembly according to a fifth embodiment of the present invention. The connection tab 6 of the first embodiment has the pull tab 65 provided at one side of the flange 61, whereas the connection tab 56 of the fifth embodiment has a pair of pull tabs 65 provided at both sides of the diameter direction of the flange 61. Therefore, the rechargeable battery assembly to which the connection tab 56 of the fifth embodiment is applied may be connected to the protection circuit in various directions.

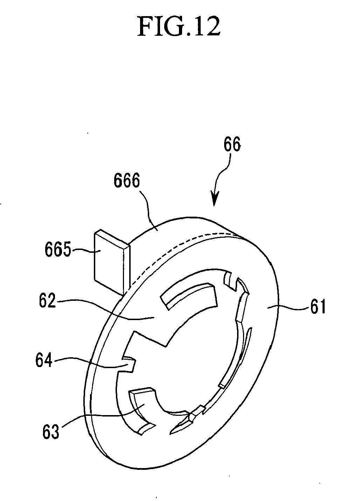

FIG. 12 is a perspective view of a connection tab of a rechargeable battery according to a sixth embodiment of the present invention. The connection tab 6 of the first embodiment has the pull tab 65 provided at one side of the flange 61, the connection tab 66 of the sixth embodiment has a pull tab 665 further comprising a skirt 666 along the circumferential direction of the flange 61. Therefore, the connection tab 66 of the sixth embodiment is contacted with the case 20 of the first unit cell 4 over a wider area, thereby forming a connection structure having a low resistance.

While this invention has been explained in connection with the described embodiments, it is to be understood that the present invention is not limited to the disclosed embodiments, but, on the contrary, is possible to cover various modifications and executions within the scope of the appended claims, the detailed description of the invention, and the appended drawings, and is clearly included in the scope of the present invention.

## Claims

1. A rechargeable battery assembly comprising:
a first unit cell (4);
a second unit cell (5) provided with a cap plate (31); and
a connection tab (6) mounted on a case of the first unit cell (4);
wherein the connection tab (6) comprises a connection tab coupling formation (62, 63) protruding from the first unit cell and the cap plate comprises a cap plate coupling formation (31 a) protruding from the second unit cell (5);
and
the connection tab coupling formation (62, 63) is coupled with the cap plate coupling formation (31 a) to form a mechanical and electrical connection between the two unit cells (4, 5);
**characterised in that**
a first one of the said coupling formations (62, 63) comprises an axially projecting member (62, 63) provided with a circumferential extension (63) and the circumferential extension (63) is constrained by a second one of the said coupling formations (31 a) in such a manner as to resist axial separation of the two unit cells (4, 5).

2. A rechargeable battery assembly according to Claim 1, wherein the said second one of the coupling formations (31 a) comprises an axial protrusion (31 a), the axially projecting member (62, 63) is constrained from axial movement by the axial protrusion (31 a), and the circumferential extension (63) is located between the axial protrusion (31a) and the unit cell (5) from which the axial protrusion (31 a) projects.

3. A rechargeable battery according to Claim 2, comprising a resilient member (366) situated between the circumferential extension (63) and the unit cell (4) from which the member (62) projects, for urging the axial protrusion (31 a) against a surface of the circumferential extension (63).

4. A rechargeable battery according to Claim 2 or 3, wherein the said axial protrusion (31 a) takes the form of a tang (31 a) projecting axially outwardly and radially inwardly from the unit cell (5) upon which the said second one of the coupling formations (31 a) is located.

5. A rechargeable battery according to Claim 4, comprising a plurality of said tangs (31 a), wherein adjacent said tangs (31 a) are separated circumferentially with a gap therebetween.

6. A rechargeable battery according to Claim 5, wherein the said first one of the coupling formations (62, 63) comprises a plurality of said members (62) and each said member (62) is accommodated within a said gap and each said extension portion (63) extends behind a respective one of the said tangs (31 a) in a first circumferential direction.

7. A rechargeable battery according to Claim 6, wherein each said extension portion (63) comprises an inclined camming surface (264) on a face thereof that faces towards the unit cell (4) upon which the said first one of the coupling formations (62, 63) is located, the said camming surfaces (264) being adapted to urge the two coupling formations axially (62, 63, 31 a) together when one is rotated relative to the other in the said first circumferential direction during a coupling operation.

8. A rechargeable battery according to Claim 6 or 7, comprising a stop formation (64) provided in each said gap; the said stop formations (64) serving to prevent rotation of the connection tab coupling formation (62, 63) relative to the end cap coupling formation (31 a) in a circumferential direction that is opposite to the said first circumferential direction.

9. A rechargeable battery according to Claim 8, wherein each said stop formation (64) is hooked.

10. A rechargeable battery according to one of Claims 5 to 9, wherein the said tangs (31 a) are joined together at respective distal end portions thereof by an end member (31 a).

11. A rechargeable battery according to any preceding claim, wherein the connection tab comprises an annular base portion (61) that is mounted on an end surface of the case of the first unit cell (4).

12. A rechargeable battery according to Claim 11, wherein the said annular portion comprises a skirt (666) for location on an end region of a side surface of the case of the first unit cell (4).

13. A rechargeable battery according to any preceding claim, wherein the said connection tab is provided with at least one radially projecting pull tab (65) for connection to a protection circuit.

14. A rechargeable battery according to any preceding claim, wherein the first one of the coupling formations is the connection tab coupling formation and the second one of the coupling formations is the cap plate coupling formation.
